# EUROPÄISCHE PATENTANMELDUNG

(11) **EP 0 553 675 A1**
(43) Veröffentlichungstag der Anmeldung: **04.08.1993**
(21) Anmeldenummer: 93100675.3
(22) Anmeldetag: 18.01.1993
(51) Int. Cl.: G01K 11/12

(54) **Verfahren und Vorrichtung zur Überwachung der Temperatur in einem Turbinenbauteil**

(30) Priorität: 29.01.1992 DE 4202440
(71) Anmelder: SIEMENS AKTIENGESELLSCHAFT, D-80333 München (DE)
(72) Erfinder: Zörner, Walter, Dipl.-Ing., W-8523 Baiersdorf (DE)

(57) **Zusammenfassung**

Zur Überwachung der Temperatur in einem Turbinenbauteil (2, 30, 31) z.B. in einem Gleitlager einer Turbinenwelle, wird erfindungsgemäß eine in einem innerhalb des Turbinenbauteils (2, 30, 31) angeordneten faseroptischen Kabel (8) durch eine Temperaturänderung im Turbinenbauteil (2, 30, 31) verursachte Änderung der Lichtleiteigenschaften erfaßt. Die Temperaturänderung im Turbinenbauteil (2, 30, 31) wird aus der Differenz zwischen Lichtintensitäten (I, I') am Eingang (E) und am Ausgang (A) des faseroptischen Kabels (8) ermittelt. Zum Lokalisieren der Temperaturänderung wird von innerhalb des faseroptischen Kabels (8) reflektiertem Licht (L'') die Laufzeit gemessen. Eine Vorrichtung (1) zur Temperaturüberwachung umfaßt ein im Inneren des Bauteils (2, 30, 31) angeordnetes faseroptisches Kabel (8), dessen in Abhängigkeit von Temperaturänderungen im Turbinenbauteil (2, 30, 31) sich ändernden Lichtleiteigenschaften erfaßbar sind.

## Beschreibung

Die Erfindung bezieht sich auf ein Verfahren zur Überwachung der Temperatur in einem Turbinenbauteil, z.B. im Lager der Turbinenwelle oder in einer Turbinenschaufel. Sie richtet sich weiter auf eine Vorrichtung zur Durchführung des Verfahrens.

Eine örtliche Überhitzung in einem Lager kann zu einer Zerstörung der Lauffläche des Lagers führen. Bei einem Turbinenlager führt häufig zunächst nur lokale Überhitzung an der Lauffläche einer Lagerschale aus Weißmetall aufgrund der hohen Reibungsleistung zu einem sich schnell ausbreitenden Schaden innerhalb des Lagers. Eine derartige Überhitzung tritt z.B. infolge einer Schrägstellung der Lagerschale oder durch in das Lager eingetragene Fremdkörper auf.

Aus der DE-PS 21 36 809 ist es bekannt, die Temperatur in einem Lager mit Hilfe eines Thermoelementes zu überwachen. Dabei ist allerdings lediglich eine örtliche Temperaturerhöhung im Lager feststellbar. Eine flächendeckende Temperaturerfassung im Lager erfordert den Einsatz einer Vielzahl von über die Lagerfläche verteilt angeordneten Thermoelementen. Dies wiederum führt zu einer Vielzahl von Meßstellen sowie zu einer umfangreichen Verkabelung und ist daher besonders aufwendig.

Beim Betrieb einer Turbinenanlage können infolge von betriebsbedingten Einflüssen Schäden auftreten, die zu einer Verminderung des Wirkungsgrades der Turbinenanlage führen. Mögliche Ursachen hierfür sind neben der eingangs erwähnten Überhitzung in einem Turbinenlager eine Belagbildung auf den Turbinenschaufeln, vom Arbeitsmedium mitgeführte Fremdkörper, Erosion oder eine Vergrößerung eines Radialspalts zwischen benachbarten Leit- und Laufschaufeln. Bisher konnten derartige Schäden lediglich indirekt durch eine Änderung des Wirkungsgrades erkannt werden. Diese Änderungen werden üblicherweise durch Messungen des Drucks und der Temperatur des Arbeitsmediums an für andere Zwecke vorgesehenen Entnahmestellen der Turbine erfaßt. Ein sicheres Erkennen einer sich anbahnenden Störung und eine Lokalisierung eines in einer einzelnen Turbinenstufe bereits aufgetretenen Schadens ist mit dieser Methode jedoch nicht möglich.

Der Erfindung liegt daher die Aufgabe zugrunde, ein Verfahren anzugeben, mit dem eine zuverlässige Erfassung einer Temperaturänderung in einem Turbinenbauteil möglich ist. Dies soll hinsichtlich eines möglichst geringen technischen Aufwands mit einer besonders geeigneten Vorrichtung erreicht werden.

Die Erfindung beruht auf der Erkenntnis, daß sich der Brechungsindex und damit die Lichtleiteigenschaften in einem faseroptischen Kabel im Bereich einer lokalen Temperaturänderung ändern.

Bezüglich des Verfahrens wird diese Aufgabe erfindungsgemäß dadurch gelöst, daß eine in einem innerhalb des Turbinenbauteils angeordneten faseroptischen Kabel durch eine Temperaturänderung im Turbinenbauteil verursachte Änderung der Lichtleiteigenschaften erfaßt wird.

Bei einer lokalen Temperaturänderung im Turbinenbauteil wird ein Teil eines innerhalb des faseroptischen Kabels geführten Lichtstrahls an der entsprechenden Stelle gestreut. Die um die Intensität des gestreuten Lichts verminderte Lichtintensität am Ausgang des faseroptischen Kabels ist somit ein Maß für die Temperaturänderung im Turbinenbauteil.

Zur Lokalisierung einer Temperaturänderung im Turbinenbauteil wird in vorteilhafter Weiterbildung des erfindungsgemäßen Verfahrens von innerhalb des faseroptischen Kabels reflektiertem Licht die Laufzeit gemessen, die eine Funktion des Ortes der Temperaturänderung ist.

Bezüglich der Vorrichtung wird die Aufgabe erfindungsgemäß gelöst durch ein im Inneren des Turbinenbauteils angeordnetes faseroptisches Kabel, wobei eine durch eine Temperaturänderung im Turbinenbauteil verursachte Änderung der Lichtleiteigenschaften im faseroptischen Kabel erfaßbar ist.

Das Turbinenbauteil kann ein Schaufelkranz oder ein Teil davon sein, z.B. eine Turbinenschaufel oder ein Schaufelring. Zur sicheren Erkennung von Temperaturänderungen in einer einzelnen Turbinenstufe ist das faseroptische Kabel zweckmäßigerweise innerhalb mindestens einer Leitschaufel eines Leitschaufelkranzes angeordnet. In diesem Fall ist der apparative Aufwand zur Meßwertaufbereitung vergleichsweise gering, weil im Gegensatz zum rotierenden Laufschaufelkranz der Leitschaufelkranz feststeht.

Bei einem Turbinenlager als Bauteil, ist das faseroptische Kabel vorteilhafterweise dicht unterhalb der Lauffläche des Lagers in einer Lagerschale aus Lagerwerkstoff, vorzugsweise aus Weißmetall, angeordnet. Dabei wird vor dem Ausgießen des Lagers mit Weißmetall das faseroptische Kabel in beliebiger Form über einen beliebig großen Teil des Lagers verlegt. Vorzugsweise ist das faseroptische Kabel über mindestens einen Teil des Lagers oder der Lagerschale mäanderförmig angeordnet.

Eine besonders flächendeckende Temperaturerfassung und somit eine Ermittlung des Temperaturprofils der gesamten Lagerfläche wird dadurch erreicht, daß in vorteilhafter Ausgestaltung der erfindungsgemäßen Vorrichtung mehrere, vorzugsweise zwei, faseroptische Kabel in unterschiedlichen Ebenen des Lagers angeordnet sind. Dadurch kann vorteilhafterweise auch ein infolge einer Störung sich veränderndes Temperaturprofil erfaßt werden. Die faseroptischen Kabel können sowohl innerhalb als auch unterhalb der Weißmetallschicht angeordnet sein. Insbesondere bei einem Lager mit großen Abmessungen wird das faseroptische Kabel in im Lager oder innerhalb der Lagerschale vorgesehenen Kanälen verlegt. Anstelle von Kanälen können auch Nuten mit Abdeckungen vorgesehen sein. Dadurch wird ein Abriß des faseroptischen Kabels aufgrund von lokal unterschiedlichen Wärmedehnungen im Lager sicher vermieden.

Zum Auskoppeln von aufgrund einer Temperaturänderung innerhalb des faseroptischen Kabels reflektiertem Licht ist zweckmäßigerweise ein optischer Richtungskoppler vorgesehen. Das Licht wird vorteilhafterweise in Form von Lichtpulsen aufgegeben. Als Lichtquelle dient zweckmäßigerweise ein Laser, der mit einer Auswertungseinrichtung, z.B. einem Prozeßrechner, verbunden ist. Als Lichtquelle kann auch eine lichtemittierende Diode (Leuchtdiode) verwendet werden. Zur Ermittlung des Temperaturprofils innerhalb des Turbinenbauteils mit Hilfe der Auswertungseinrichtung ist diese zweckmäßigerweise mit dem Richtungskoppler verbunden. In der Auswertungseinrichtung wird aus den Intensitäten des reflektierten Lichts und des Lichts am Eingang und am Ausgang des faseroptischen Kabels sowie aus der Laufzeit des reflektierten Lichts das Temperaturprofil innerhalb des Turbinenbauteils ermittelt. Das Temperaturprofil wird auf einem Bildschirm, vorzugsweise dreidimensional, dargestellt.

Die mit der Erfindung erzielten Vorteile bestehen insbesondere darin, daß für eine umfassende Beurteilung des Zustands eines Turbinenbauteils, z.B. eines Turbinenlagers oder einer Turbinenschaufel, unter Vermeidung einer Vielzahl von Einzelmessungen die Temperatur im Bauteil mit nur einem faseroptischen Kabel überwacht werden kann. Insbesondere bei einer engmaschigen Vernetzung des faseroptischen Kabels über die Länge des Bauteils ist es möglich, über eine Approximation von gemessenen Temperaturverläufen auf sich verändernde Temperaturen zu schließen. Damit wiederum kann ein Temperaturprofil mit Betrag und Ausbreitungsrichtung von Temperaturänderungen ermittelt und dargestellt werden.

Die Anwendung des faseroptischen Kabels zur Überwachung der Temperatur einer Turbinenschaufel ermöglicht darüber hinaus eine Ermittlung von Temperaturänderungen des Arbeitsmittels in den einzelnen Turbinenstufen. Eine Änderung der Temperatur des Arbeitsmittels ermöglicht wiederum auf einfache Weise das frühzeitige Erkennen einer sich anbahnenden Verminderung des Wirkungsgrades einer einzelnen betroffenen Turbinenstufe.

Zur näheren Erläuterung der Erfindung werden anhand einer Zeichnung Ausführungsbeispiele beschrieben; darin zeigen:
Figur 1 in vereinfachter, teilweise perspektivischer Darstellung eine erfindungsgemäße Vorrichtung mit einem faseroptischen Kabel in einer Lagerhälfte eines Turbinenlagers,
Figur 2 eine Lagerhälfte gemäß Figur 1 mit einem innerhalb einer Lagerschale angeordneten faseroptischen Kabel,
Figur 3 eine Lagerhälfte gemäß Figur 2 mit einem unterhalb der Lagerschale angeordneten faseroptischen Kabel,
Figur 4 in schematischer Darstellung eine Vorrichtung gemäß Figur 1 mit einem Richtungskoppler,
Figur 5 eine Anordnung gemäß Figur 4 mit zwei rasterförmig angeordneten faseroptischen Kabeln im Turbinenlager, und
Figur 6 eine Anordnung eines faseroptischen Kabels in einem Leitschaufelkranz einer Turbinenstufe.

Einander entsprechende Teile sind in allen Figuren mit den gleichen Bezugszeichen versehen.

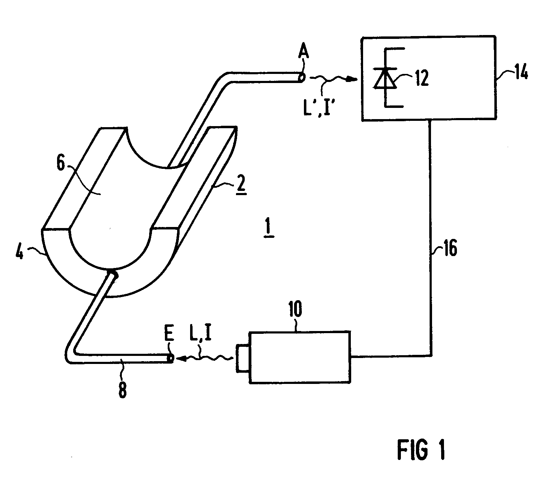

Die in Figur 1 dargestellte Vorrichtung 1 zur Überwachung der Temperatur in einem Turbinenlager 2, von dem nur die untere Lagerhälfte 4 gezeigt ist, umfaßt ein dicht unterhalb deren Lauffläche 6 angeordnetes faseroptisches Kabel 8. Das faseroptische Kabel 8 verläuft axial im Bereich der größten Reibungsleistung, d.h. im Auflagebereich des Lagers 2. Das Lager 2 ist z.B. ein Gleitlager einer Turbinenwelle.

Das faseroptische Kabel 8 hat einen Durchmesser von etwa 0,2 mm und ist von einem nicht dargestellten Außenmantel, z.B. aus einer Nickellegierung, umgeben.

Zur Überwachung der Temperatur innerhalb des Lagers 2 wird mit Hilfe eines Lasers 10 in das faseroptische Kabel 8 über dessen Eingang E ein kurzer, intensiver Lichtpuls L mit einer Intensität I eingekoppelt. Das am Ausgang A des faseroptischen Kabels 8 ausgekoppelte Licht L' wird von einem Lichtsensor 12, z.B. einer Photodiode, erfaßt und in eine entsprechendes elektrisches Signal umgewandelt. Der Lichtsensor 12 ist Teil einer Auswertungseinrichtung 14, die über eine Leitung 16 mit dem Laser 10 verbunden ist. Anstelle des Lasers 10 kann auch eine andere Lichtquelle, z.B. eine Leuchtdiode, vorgesehen sein.

Tritt innerhalb des Lagers 2 eine Temperaturänderung auf, so ändern sich die Lichtleiteigenschaften im faseroptischen Kabel 8. Dies führt zu Streuverlusten innerhalb des faseroptischen Kabels 8 und damit zu einer Änderung der Intensität I' des Lichtes L' am Ausgang A. Diese Änderung wird über den Lichtsensor 12 an die Auswertungseinrichtung 14 übertragen. In der Auswertungseinheit 14 wird aus der Differenz zwischen den Intensitäten I und I' des Lichts am Eingang E bzw. am Ausgang A des faseroptischen Kabels 8 der Grad der Temperaturänderung ermittelt.

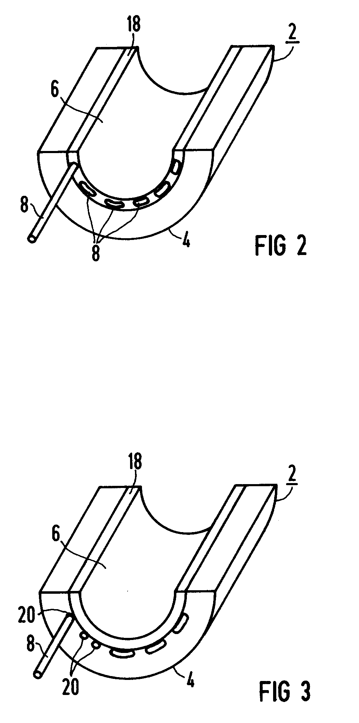

Um eine großflächige Temperaturüberwachung im Lager 2 zu erreichen, ist das faseroptische Kabel 8 vorteilhafterweise mindestens teilweise mäanderförmig angeordnet. Beispiele für eine derartige Anordnung sind in den Figuren 2 und 3 dargestellt.

Bei dem in Figur 2 dargestellten Turbinenlager 2 ist das faseroptische Kabel 8 innerhalb einer Lagerschale 18 aus Weißmetall angeordnet, das zur Verminderung der Gleitreibung die Lauffläche 6 des Lagers 2 bildet. Dazu wird das faseroptische Kabel 8 vor dem Ausgießen mit Weißmetall auf der inneren Oberfläche des Lagers 2 mäanderförmig - oder nach Art einer Spule in Form von Wicklungen - verlegt.

Um bei einem Lager 2 mit großen Abmessungen eine Beschädigung des faseroptischen Kabels 8 aufgrund von lokal unterschiedlichen Wärmedehnungen innerhalb des Lagers 2 zu vermeiden, wird das faseroptische Kabel 8 zweckmäßigerweise dicht unterhalb der Lagerschale 18 aus Weißmetall in Kanälen 20 verlegt. Dies ist in Figur 3 dargestellt. Anstelle der Kanäle 20 können auch in nicht näher dargestellter Art und Weise Nuten vorgesehen sein, die nach Verlegen des faseroptischen Kabels 8 und vor dem Aufbringen des Weißmetalls mit Abdeckungen versehen werden.

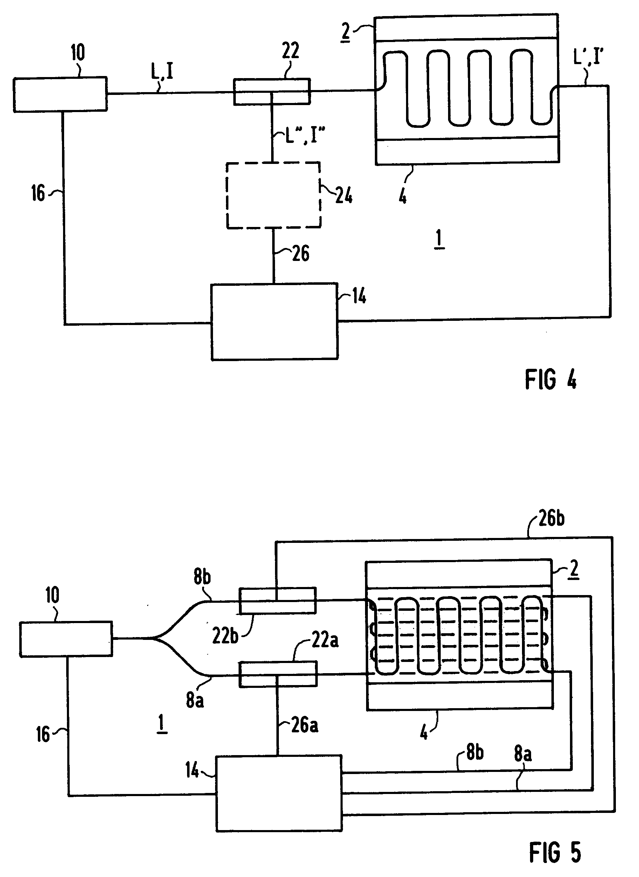

Figur 4 zeigt eine Vorrichtung 1 mit einem in das faseroptische Kabel 8 geschalteten optischen Richtungskoppler 22. Über den optischen Richtungskoppler 22 wird durch eine Temperaturänderung innerhalb des Lagers 2 im faseroptischen Kabel 8 reflektiertes Licht L'' ausgekoppelt und - gegebenenfalls über einen optischen Verstärker 24 - mittels eines faseroptischen Kabels 26 an die Auswertungseinrichtung 14 übertragen. Dort wird aus der Laufzeit des reflektierten Lichts L'', dessen Intensität I'' gemessen wird, der Ort der Temperaturänderung innerhalb des Lagers 2 ermittelt.

Bei dem Ausführungsbeispiel gemäß Figur 5 ist das faseroptische Kabel 8 in zwei Zweige 8a und 8b aufgeteilt, die in der Lagerhälfte 4 des Lagers 2 in zwei Ebenen rasterförmig angeordnet sind. Dadurch wird eine flächendeckende Temperaturüberwachung erreicht. Jeder Zweig 8a und 8b umfaßt einen Richtungskoppler 22a bzw. 22b, die über jeweils ein faseroptisches Kabel 26a und 26b mit der Auswertungseinrichtung 14 verbunden sind.

In der Auswertungseinrichtung 14 wird, z.B. mittels eines Computers, aus den Intensitäten I, I' und I'' sowie der Laufzeit des reflektierten Lichts L'' das Temperaturprofil im Lager 2 ermittelt und auf einem nicht gezeigten Bildschirm zwei- oder dreidimensional dargestellt.

Durch die Anordnung der Zweige 8a und 8b in zwei Ebenen gemäß Figur 5 wird die Temperaturverteilung über die Lauffläche 6 des Lagers 2 integral erfaßt, so daß eine umfassende Beurteilung des Lagerzustands gewährleistet ist. Dabei beträgt die Meßgenauigkeit auf einem Meter faseroptischen Kabels 8 etwa 1° C.

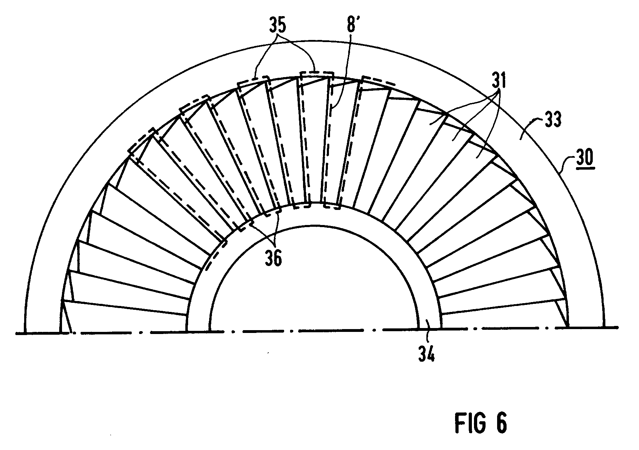

In Figur 6 ist eine Hälfte eines Leitschaufelkranzes 30 mit einer Anzahl von Leitschaufeln 31 dargestellt. Der Leitschaufelkranz 30 ist Teil einer Turbinenstufe, z.B. einer Niederdruckstufe einer Dampfturbine. Er umfaßt einen äußeren und einen inneren Schaufelring 33 bzw. 34, in denen die Leitschaufeln 31 befestigt sind. Ein faseroptisches Kabel 8'ist vorzugsweise innerhalb von (nicht sichtbaren) Kanälen angeordnet, die sich in radialer Richtung durch die Leitschaufeln 31 erstrecken. An den Wendestellen 35 und 36 liegt das faseroptische Kabel 8' innerhalb des äußeren bzw. inneren Schaufelrings 33 bzw. 34.

Durch eine Anordnung von faseroptischen Kabeln in Turbinenanlagenteilen, z.B. in Zu- und Abströmpartien von Turbinengehäusen, im Kondensator oder in einem Wärmetauscher auf der Dampf- und Wasserseite, kann die Dampf- oder Kondensattemperatur indirekt überwacht werden. Dazu ist das faseroptische Kabel häufig auf oder in einem besonderen Träger angeordnet.

## Patentansprüche

1. Verfahren zur Überwachung der Temperatur in einem Turbinenbauteil (2, 30, 31),
**dadurch gekennzeichnet,** daß eine durch eine Temperaturänderung im Turbinenbauteil (2, 30, 31) verursachte Änderung der Lichtleiteigenschaften in einem innerhalb des Turbinenbauteils (2, 30, 31, 33, 34) angeordneten faseroptischen Kabel (8) erfaßt wird.

2. Verfahren nach Anspruch 1,
**dadurch gekennzeichnet,** daß die Temperaturänderung im Turbinenbauteil (2, 30, 31) aus der Differenz zwischen den Lichtintensitäten (I, I') am Eingang (E) und am Ausgang (A) des faseroptischen Kabels (8) ermittelt wird.

3. Verfahren nach Anspruch 1 oder 2,
**dadurch gekennzeichnet,** daß von innerhalb des faseroptischen Kabels (8) reflektiertem Licht (L'') die Laufzeit gemessen wird, die eine Funktion des Ortes einer Temperaturänderung ist.

4. Vorrichtung zur Überwachung der Temperatur in einem Turbinenbauteil (2, 30, 31), insbesondere zur Durchführung des Verfahrens nach einem der Ansprüche 1 bis 3,
**gekennzeichnet durch** ein im Inneren des Turbinenbauteils (2, 30, 31) angeordnetes faseroptisches Kabel (8), wobei eine durch eine Temperaturänderung im Turbinenbauteil (2, 30, 31) verursachte Änderung der Lichtleiteigenschaften im faseroptischen Kabel (8) erfaßbar ist.

5. Vorrichtung nach Anspruch 4,
**dadurch gekennzeichnet,** daß das Turbinenbauteil ein Schaufelkranz (30) oder ein Teil (31, 33, 34) davon ist.

6. Vorrichtung nach Anspruch 4,
**dadurch gekennzeichnet,** daß bei einem Turbinenlager (2) das faseroptische Kabel (8) in der Lauffläche (6) einer Lagerschale (18) aus Lagerwerkstoff, vorzugsweise aus Weißmetall, angeordnet ist.

7. Vorrichtung nach Anspruch 6,
**dadurch gekennzeichnet,** daß das faseroptische Kabel (8) innerhalb von axial verlaufenden Kanälen (20) in dem Lager (2) oder der Lagerschale (18) angeordnet ist.

8. Vorrichtung nach Anspruch 6 oder 7,
**dadurch gekennzeichnet,** daß das faseroptische Kabel (8) über mindestens einen Teil des Lagers (2) oder der Lagerschale (18) mäanderförmig angeordnet ist.

9. Vorrichtung nach einem der Ansprüche 5 bis 8,
**dadurch gekennzeichnet,** daß mehrere, vorzugsweise zwei, faseroptische Kabel (8a, 8b) in unterschiedlichen Ebenen angeordnet sind.

10. Vorrichtung nach einem der Ansprüche 5 bis 9,
**dadurch gekennzeichnet,** daß ein optischer Richtungskoppler (22) zum Auskoppeln von reflektiertem Licht (L'') vorgesehen ist.

11. Vorrichtung nach einem der Ansprüche 5 bis 10,
**dadurch gekennzeichnet,** daß Licht (L) in Form von Lichtpulsen auf das faseroptische Kabel (8) aufgebbar ist.

12. Vorrichtung nach einem der Ansprüche 5 bis 11,
**dadurch gekennzeichnet,** daß als Lichtquelle ein Laser (10) vorgesehen ist, der mit einer Auswertungseinrichtung (14) verbunden ist.

13. Vorrichtung nach einem der Ansprüche 5 bis 12,
**dadurch gekennzeichnet,** daß die Auswertungseinrichtung (14) mit dem Richtungskoppler (22) verbunden ist.
